# EUROPÄISCHE PATENTSCHRIFT

(11) **EP 3 776 835 B1**
(45) Veröffentlichungstag und Bekanntmachung des Hinweises auf die Patenterteilung: **27.09.2023**
(21) Anmeldenummer: 19716853.7
(22) Anmeldetag: 03.04.2019
(51) Int. Cl.: H02M 7/487, H02M 1/32, H02M 1/08

(54) **SCHALTUNGSANORDNUNG FÜR DREIPUNKTUMRICHTER**
CIRCUIT ARRANGEMENT FOR THREE POINT CONVERTER
AGENCEMENT DE CIRCUIT POUR CONVERTISSEUR À TROIS POINTS

(30) Priorität: 10.04.2018 EP 18166543
(43) Veröffentlichungstag der Anmeldung: 17.02.2021
(73) Patentinhaber: Siemens Aktiengesellschaft, 80333 München (DE)
(72) Erfinder: WEIS, Benno, 91334 Hemhofen (DE)
(74) Vertreter: Siemens Patent Attorneys
(86) Internationale Anmeldenummer: PCT/EP2019/058370
(87) Internationale Veröffentlichungsnummer: WO 2019/197236

(56) Entgegenhaltungen:
- WO-A1-2015/133985
- DE-A1-102012 205 080
- JP-A- 2002 165 462
- US-A1- 2005 281 065

## Beschreibung

Die Erfindung betrifft einen Dreipunkt-NPC-Stromrichter mit einer oberen Halbbrücke und einer unteren Halbbrücke nach Anspruch 1, nach Anspruch 2 und nach Anspruch 3.

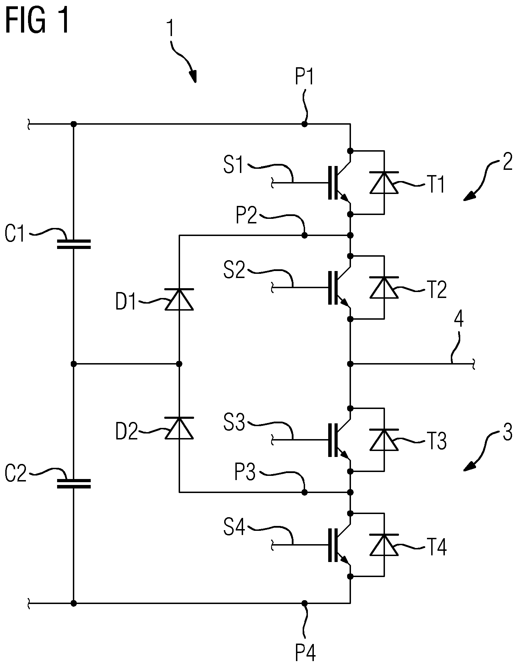

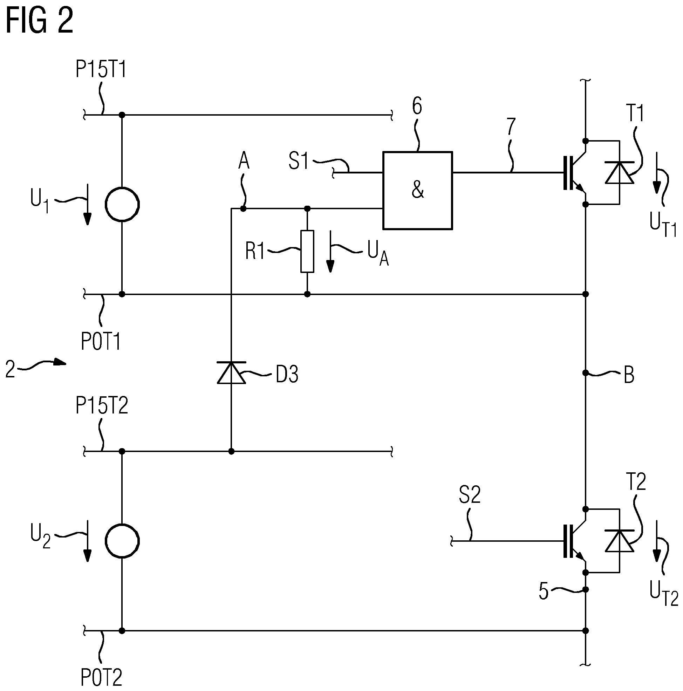

In der Figur 1 ist ein Dreipunkt-NPC-Umrichter 1 gemäß dem Stand der Technik dargestellt. Aus Übersichtlichkeitsgründen ist in Figur 1 sowie in den im Folgenden erläuterten Figuren 2 bis 6 jeweils nur die Schaltung für eine Phase dargestellt. Die beschriebenen Prinzipien sind auf mehrphasige Umrichter analog übertragbar.

Der Begriff NPC steht für "neutral point clamped". Ein solcher Umrichter ist eine Erweiterung eines Zweipunkt-Umrichters dar und kann im Gegensatz zu diesem nicht nur zwei Spannungsstufen, sondern drei realisieren. Dies wird dadurch erreicht, dass zusätzlich eine Nullpunktspannung am Ausgang des Umrichters eingestellt werden kann.

Der in Figur 1 dargestellte Dreipunkt-NPC-Umrichter 1 umfasst eine obere Halbbrücke 2 und eine untere Halbbrücke 3.

Die obere Halbbrücke 2 umfasst einen Kondensator C1, eine Diode D1, zwei Transistoren T1, T2 sowie zwei Ansteuerschaltungen S1, S2 für die Transistoren T1, T2. Der in Figur 1 in der Zeichenebene weiter oben angeordnete Transistor T1 ist ein äußerer Transistor T1 der oberen Halbbrücke 2. Der in Figur 1 in der Zeichenebene weiter unten angeordnete Transistor T2 ist ein innerer Transistor T1 der oberen Halbbrücke 2. Mittels der Ansteuerschaltungen S1, S2 kann ein jeweiliger Schaltzustand der Transistoren T1, T2 (durchlassend/sperrend) gesteuert werden.

Die untere Halbbrücke 3 umfasst einen Kondensator C2, eine Diode D2, zwei Transistoren T3, T4 sowie zwei Ansteuerschaltungen S3, S4 für die Transistoren T3, T4. Der in Figur 1 in der Zeichenebene weiter oben angeordnete Transistor T3 ist ein innerer Transistor T3 der unteren Halbbrücke 3. Der in Figur 1 in der Zeichenebene weiter unten angeordnete Transistor T4 ist ein äußerer Transistor T4 der unteren Halbbrücke 3. Mittels der Ansteuerschaltungen S3, S4 kann ein jeweiliger Schaltzustand der Transistoren T3, T4 (durchlassend/sperrend) gesteuert werden.

Auf das an sich bekannte Funktionsprinzip wird in diesem Zusammenhang nicht weiter eingegangen. Wichtig ist, dass in dem Dreipunkt-NPC-Umrichter 1 eine Kommutierungsreihenfolge für einen Stromfluss ordnungsgemäß eingehalten wird. Vor allem muss sichergestellt werden, dass die beiden äußeren Transistoren T1, T4 nur dann eingeschaltet werden dürfen, wenn die zugehörigen inneren Transistoren T2, T3 ebenfalls eingeschaltet sind. Wird diese Bedingung verletzt, so besteht die Gefahr, dass die inneren Transistoren T2, T3 spannungsmäßig überlastet werden.

Prinzipiell kann es auf zwei Arten zu diesem gefährlichen Zustand kommen:
a) Beide Transistoren T1, T2, T3, T4 einer Halbbrücke 2,3, beispielswiese die Transistoren T1, T2 der oberen Halbbrücke 2, sind eingeschaltet (d.h. durchlassend) und der innere Transistor T2 schaltet ab (d.h. er sperrt), bevor der äußere Transistor T1 abgeschaltet wurde. Dies kann z.B. dadurch ausgelöst werden, dass der innere Transistor T2 im Kurzschlussfall mit einer Entsättigungsüberwachung abschaltet. Es kann auch dann vorkommen, wenn eine Gatespannungsversorgung des inneren Transistors T2 ihren Minimalwert unterschreitet. Zudem kann die Ursache in einer unvermittelten Pulssperre des Dreipunkt-NPC-Umrichters 1 liegen.
b) Beide Transistoren T1, T2, T3, T4 einer Halbbrücke 2, 3, beispielswiese die Transistoren T1, T2 der oberen Halbbrücke 2, sind abgeschaltet und der äußere Transistor T1 schaltet ein, bevor der innere Transistor T2 eingeschaltet wird. Dieser Fall kommt bei einer korrekten Ansteuerung in der Regel nicht vor, wird jedoch im Rahmen der folgenden Ausführungen mit behandelt.

Um dies zu vermeiden, ist es bekannt, von den Ansteuerschaltungen S1, S2, S3, S4 erzeugte Ansteuerpulse für die Transistoren T1, T2, T3, T4 von einer übergeordneten Steuerlogik entsprechend zu generieren. Dazu gehört beispielsweise, dass betriebsmäßig niemals beide Transistoren T1, T2, T3, T4 einer Halbbrücke 2, 3 gleichzeitig schalten, sondern die äußeren Transistoren T1, T4 immer nur nach den inneren Transistoren T2, T3 durchlassend geschaltet werden, so dass ein äußeres Potential P1, P4 jeweils nach einem inneren Potential P2, P3 auf einen Ausgang 4 des Dreipunkt-NPC-Umrichters 1 gegeben wird.

Allerdings stellt dies nicht in allen Betriebsfällen sicher, dass z.B. der innere Transistor T2 niemals ausgeschaltet wird, solange der äußere Transistor T1 eingeschaltet ist. Bei dem unter Punkt a) aufgezählten Betriebsfällen wird der Transistor T2 unabhängig abgeschaltet, ohne dass der Transistor T1 zwangsweise bereits abgeschaltet wurde. Dies kann nach Stand der Technik vermieden werden, indem der Transistor T2 eine Rückmeldung über seinen aktuellen Schaltzustand an die übergeordnete Steuerlogik liefert, die dann den Transistor T1 ebenfalls abschaltet. Diese Rückmeldung erfordert jedoch eine Potenzialtrennung, die Kosten verursacht. Zudem liegt der unzulässige Zustand trotzdem über eine gewisse Zeit hinweg an.

In der WO 2015/133985 A1 und der JP 2002 165462 A sind Ansteuerschaltungen für Transistoren offenbart, die einer nachteiligen Potentialtrennung bedürfen.

Der Erfindung liegt die Aufgabe zugrunde, einen Dreipunkt-NPC-Stromrichter anzugeben, der auf kostengünstige Art und Weise gegen fehlerhafte Kommutierungen geschützt ist und die vorstehend genannten Nachteile des Standes der Technik vermeidet.

Diese Aufgabe wird gelöst durch einen Dreipunkt-NPC-Stromrichter mit einer oberen Halbbrücke und einer unteren Halbbrücke, wobei jede Halbbrücke jeweils einen inneren Transistor und einen äußeren Transistor aufweist, nach Anspruch 1.

Der Dreipunkt-NPC-Stromrichter ist derart ausgestattet, dass der der innere Transistor der oberen Halbbrücke mit dem äußeren Transistor der oberen Halbbrücke derart zusammenwirkend ausgebildet ist, dass ein Signal, das einen Schaltzustand des inneren Transistors wiedergibt, unmittelbar in eine Ansteuerschaltung zur Schaltung des äußeren Transistors eingekoppelt wird und einen Schaltzustand des äußeren Transistors unmittelbar beeinflusst,
wobei der Schaltzustand des inneren Transistors aus einem Potential an dem Punkt B zwischen dem inneren Transistor und dem äußeren Transistor ermittelt wird,
und wobei eine Einwirkung des Signals, das den Schaltzustand des inneren Transistors wiedergibt, auf den Schaltzustand des äußeren Transistors ohne jegliche Potentialtrennung erfolgt, derart, dass, wenn die beiden Transistoren der oberen Halbbrücke eingeschaltet sind, und
der innere Transistor in einen Schaltzustand "sperrend" versetzt wird, der äußerer Transistor demzufolge auch sofort in einen Schaltzustand "sperrend" versetzt wird, und dass, wenn die beiden Transistoren der oberen Halbbrücke abgeschaltet sind, der äußere Transistor nicht in einen Schaltzustand "durchlassend" versetzt werden kann, bevor der innere Transistor in einen Schaltzustand "durchlassend" versetzt worden ist.

Eine "unmittelbare" Einkopplung bzw. Beeinflussung meint dabei, dass eine Einwirkung des Signals, das den Schaltzustand des inneren Transistors wiedergibt, auf den Schaltzustand des äußeren Transistors ohne jegliche Potentialtrennung erfolgt. Hierdurch grenzt sich der erfindungsgemäße Dreipunkt-NPC-Stromrichter von bekannten Lösungen ab, bei welchen der innere Transistor eine Rückmeldung über seinen aktuellen Schaltzustand an eine übergeordnete Steuerlogik liefert. Hierzu ist jedoch eine Potentialtrennung vonnöten, die Kosten verursacht. Zusätzlich liegen die zuvor erläuterten unzulässigen Zustände dennoch für eine kurze Zeitdauer an.

Diese Aufgabe wird zudem gelöst durch einen Dreipunkt-NPC-Stromrichter mit einer oberen Halbbrücke und einer unteren Halbbrücke, wobei jede Halbbrücke jeweils einen inneren Transistor und einen äußeren Transistor aufweist, nach Anspruch 2.

Der Dreipunkt-NPC-Stromrichter ist derart ausgestattet, dass der innere Transistor der unteren Halbbrücke mit dem äußeren Transistor der unteren Halbbrücke derart zusammenwirkend ausgebildet ist, dass ein Signal, das einen Schaltzustand des inneren Transistors wiedergibt, unmittelbar in eine Ansteuerschaltung zur Schaltung des äußeren Transistors eingekoppelt wird und einen Schaltzustand des äußeren Transistors unmittelbar beeinflusst, wobei der Schaltzustand des inneren Transistors aus einem Potential an dem Punkt C zwischen dem inneren Transistor und der Ansteuerschaltung zur Schaltung des äußeren Transistors ermittelt wird, wobei zwischen dem inneren Transistor und der Ansteuerschaltung zur Schaltung des äußeren Transistors eine Diode angeordnet ist,
und wobei eine Einwirkung des Signals, das den Schaltzustand des inneren Transistors wiedergibt, auf den Schaltzustand des äußeren Transistors ohne jegliche Potentialtrennung erfolgt,
und wobei die Ansteuerschaltung ein Überbrückungselement aufweist, das dazu ausgebildet ist, eine unmittelbare Beeinflussung des Schaltzustands des äußeren Transistors durch das Signal, das den Schaltzustand des inneren Transistors wiedergibt, für eine bestimmte Zeitdauer zu unterbrechen,
derart, dass, wenn die beiden Transistoren der unteren Halbbrücke eingeschaltet sind, und der innere Transistor in einen Schaltzustand "sperrend" versetzt wird, der äußerer Transistor demzufolge auch sofort in einen Schaltzustand "sperrend" versetzt wird, und dass wenn die beiden Transistoren der unteren Halbbrücke abgeschaltet sind, der äußere Transistor nicht in einen Schaltzustand "durchlassend" versetzt werden kann, bevor der innere Transistor in einen Schaltzustand "durchlassend" versetzt worden ist.

Eine "unmittelbare" Einkopplung bzw. Beeinflussung meint dabei analog, dass eine Einwirkung des Signals, das den Schaltzustand des inneren Transistors wiedergibt, auf den Schaltzustand des äußeren Transistors ohne jegliche Potentialtrennung erfolgt.

Zudem wird die Aufgabe gelöst durch einen Dreipunkt-NPC-Stromrichter nach Anspruch 3.

Die erfindungsgemäßen Dreipunkt-NPC-Stromrichter stellen jeweils aufwandsarm sicher, dass die zuvor erläuterten verbotenen Schaltzustände (a und b) nicht auftreten.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- FIG 1: ein Schaltbild eines Dreipunkt-NPC-Stromrichters gemäß dem Stand der Technik;
- FIG 2: ein Schaltbild einer oberen Halbbrücke eines erfindungsgemäßen Dreipunkt-NPC-Stromrichters;
- FIG 3: ein Schaltbild eines ersten Aspekts einer unteren Halbbrücke eines Dreipunkt-NPC-Stromrichters gemäß einer für das Verständnis der Erfindung nützlichen Ausführungsform;
- FIG 4: ein Schaltbild eines zweiten Aspekts einer unteren Halbbrücke eines erfindungsgemäßen DreipunktNPC-Stromrichters gemäß einer ersten Ausführungsform;
- FIG 5: Signalverläufe zur Ansteuerung eines Überbrückungselements eines erfindungsgemäßen DreipunktNPC-Stromrichters;
- FIG 6: ein Schaltbild einer unteren Halbbrücke eines erfindungsgemäßen Dreipunkt-NPC-Stromrichters gemäß einer zweiten Ausführungsform; und
- FIG 7: eine Logikschaltung für ein Überbrückungselement.

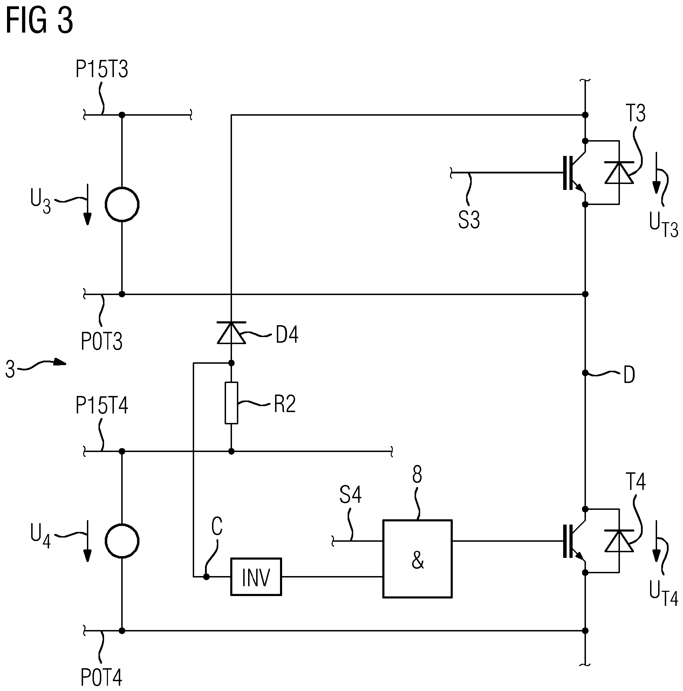

Aus Übersichtlichkeitsgründen ist in FIG 2 sowie in den folgenden Figuren 3 bis 6 jeweils nur die Schaltung für eine Phase dargestellt. Die beschriebenen Prinzipien sind auf mehrphasige Umrichter analog übertragbar.

In FIG 2 ist eine obere Halbbrücke 2 eines erfindungsgemäßen Dreipunkt-NPC-Umrichters 1 dargestellt. Die obere Halbbrücke 2 umfasst eine Diode D3, zwei Transistoren T1, T2 sowie zwei Ansteuerschaltungen S1, S2 für die Transistoren T1, T2. Der in FIG 2 in der Zeichenebene weiter oben angeordnete Transistor T1 ist ein äußerer Transistor T1 der oberen Halbbrücke 2. Der in FIG 2 in der Zeichenebene weiter unten angeordnete Transistor T2 ist ein innerer Transistor T1 der oberen Halbbrücke 2. Mittels der Ansteuerschaltungen S1, S2 kann ein jeweiliger Schaltzustand der Transistoren T1, T2 (durchlassend/sperrend) gesteuert werden.

Erfindungsgemäß wird ein Signal, das den Schaltzustand des inneren Transistors T2 wiedergibt, in die Ansteuerschaltung S1 des äußeren Transistors T1 eingekoppelt. Dies folgendermaßen erreicht:
Alle in FIG 2 verwendeten Potentiale beziehen sich auf das in der Zeichnung unten befindliche Potential POT2. Bei einer Differenz des Potentials P15T2 und des Potentials P0T2, welches an einem inneren Anschluss des inneren Transistors T2 anliegt, handelt es sich beispielhaft um eine Spannung U₁ in Höhe von 15 V. Bei einer Differenz des Potentials P15T1 und des Potentials P0T1, welches an dem Punkt B anliegt, handelt es sich beispielhaft um eine Spannung U₂ in Höhe von 15 V.

Die Diode D3 verbindet das Potential P15T2 mit einer logischen UND-Verknüpfung 6, in welche auch die Ansteuerschaltung S1 eingekoppelt ist. Leitet die Diode D3, so gibt die logische UND-Verknüpfung 6 ein Signal 7 an den äußeren Transistor T1, so dass dieser in einen Zustand "durchlassend" wechselt.

Wenn der innere Transistor T2 im Zustand "sperrend" ist, d.h. wenn er "ausgeschaltet" ist, liegt an einem Punkt B ein Potential an, das höher ist als ein Potential P15T2, das an einem Ende der Diode D3 anliegt. Damit sperrt die Diode D3. Eine Spannung U_{A} zwischen einem Punkt A an einem anderen Ende der Diode D3 und dem Potential des Punktes B ist dabei Null. Die logische UND-Verknüpfung 6 gibt - unabhängig von der Ansteuerschaltung S1 - kein Signal 7 an den äußeren Transistor T1, so dass dieser in den Zustand "sperrend" wechselt.

Wenn der innere Transistor T2 in den Zustand "durchlassend" wechselt, d.h. wenn er "einschaltet", sinkt das Potential an dem Punkt B betragsmäßig unter das Potential P15T2. Dadurch geht die Diode D3 in einen leitenden Zustand über und die Spannung U_{A} wird positiv. Damit geht die logische UND-Verknüpfung 6 in einen Zustand, der ein Signal von der Ansteuerschaltung S1 als Signal 7 an den äußeren Transistor T1 durchlässt.

Durch den erfindungsgemäßen Dreipunkt-NPC-Stromrichter kann zum einen verhindert werden, dass der äußere Transistor T1 sperrt, bevor der innere Transistor T2 in den Zustand "sperrend" gewechselt ist. Zudem kann verhindert werden, dass der äußere Transistor T1 eingeschaltet wird, d.h. in den Zustand "durchlassend" wechselt, bevor der innere Transistor T2 in den Zustand "durchlassend" gewechselt hat.

Die Diode D3 muss in der Regel dazu ausgelegt sein, mindestens eine Sperrspannung des inneren Transistors T2 zu sperren.

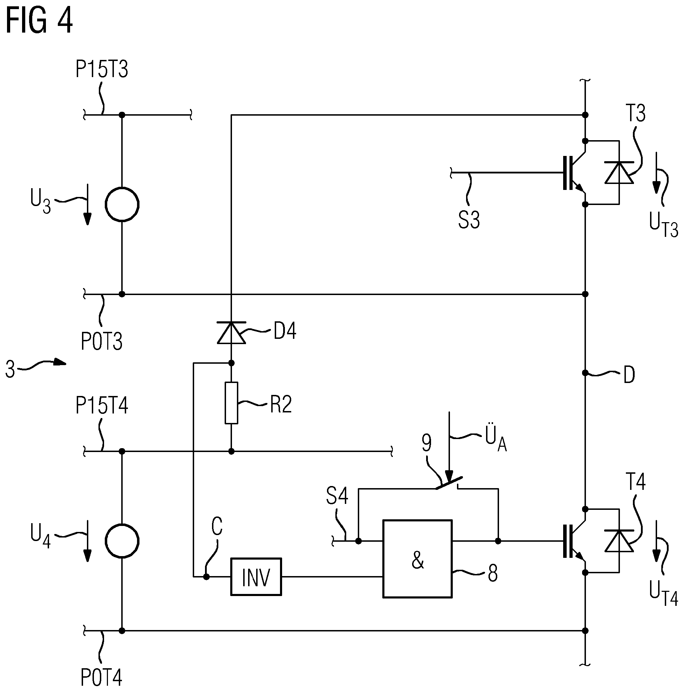

In FIG 3 ist eine untere Halbbrücke 3 eines Dreipunkt-NPC-Umrichters 1 dargestellt gemäß einer für das Verständnis der Erfindung nützlichen Ausführungsform Alle in FIG 3 und FIG 4 verwendeten Potentiale beziehen sich auf das in der Zeichnung unten befindliche Potential POT4. Bei einer Differenz des Potentials P15T4 und des Potentials P0T4, handelt es sich beispielhaft um eine Spannung U₃ in Höhe von 15 V. Bei einer Differenz des Potentials P15T3 und des Potentials P0T3, welches an dem Punkt D anliegt, handelt es sich beispielhaft um eine Spannung U₂ in Höhe von 15 V.

Die untere Halbbrücke 3 umfasst eine Diode D4, zwei Transistoren T3, T4 sowie zwei Ansteuerschaltungen S3, S4 für die Transistoren T3, T4. Der in FIG 3 in der Zeichenebene weiter unten angeordnete Transistor T4 ist ein äußerer Transistor T4 der unteren Halbbrücke 3. Der in FIG 3 in der Zeichenebene weiter oben angeordnete Transistor T3 ist ein innerer Transistor T3 der unteren Halbbrücke 3. Mittels der Ansteuerschaltungen S3, S4 kann ein jeweiliger Schaltzustand der Transistoren T3, T4 (durchlassend/sperrend) gesteuert werden.

Erfindungsgemäß wird ein Signal, das den Schaltzustand des inneren Transistors T3 wiedergibt, in die Ansteuerschaltung S4 des äußeren Transistors T4 eingekoppelt. Zudem ist erfindungsgemäß ein Überbrückungselement vorgesehen, das dazu ausgebildet ist, eine Beeinflussung des Schaltzustands des äußeren Transistors T4 durch das Signal, das den Schaltzustand des inneren Transistors T3 wiedergibt, für eine bestimmte Zeitdauer zu unterbrechen. Um eine bessere Verständlichkeit zu erreichen, wird zunächst anhand der FIG 3 beschrieben, wie das Signal, das den Schaltzustand des inneren Transistors T3 wiedergibt, in die Ansteuerschaltung S4 des äußeren Transistors T4 eingekoppelt wird. Dies wird folgenderma-ßen erreicht:
Sind sowohl der äußere Transistor T4 als auch der innere Transistor T3 eingeschaltet, d.h. sie sind im Zustand "durchlassend", so sind eine Spannung U_{T3} über dem inneren Transistor T3 und eine Spannung U_{T4} über dem äußeren Transistor T4 Null. Dadurch liegt über der Diode D4 in Durchlassrichtung ein Potential P15T4 an, so dass die Diode leitet. Ein Potential an einem Punkt C, der mit einer logischen UND-Verknüpfung 8 verbunden ist, sinkt dadurch ab. Unter dieser Bedingung wird ein Steuerbefehl der Ansteuerschaltung S4, die ebenfalls mit der logischen UND-Verknüpfung 8 verbunden ist, an den äußeren Transistor T4 weitergegeben.

Schaltet in diesem Betriebszustand der innere Transistor T3 ab, d.h. er geht in den Zustand "sperrend" über, beispielsweise wegen einer Unterbrechung seiner Gateversorgung, sperrt die Diode D4. Damit steigt das Potential am Punkt C wieder auf einen höheren Wert an (beispielsweise 15 V). Dies entspricht einer logischen Null der logischen UND-Verknüpfung 8, so dass diese einen Steuerbefehl der Ansteuerschaltung S4 nicht an den äußeren Transistor T4 weitergibt.

Die Diode D4 muss in der Regel dazu ausgelegt sein, mindestens eine doppelte Sperrspannung des inneren Transistors T3 bzw. des äußeren Transistors T4 zu sperren.

Bei der in FIG 3 dargestellten Schaltung würde die Diode D4 auch dann sperren, wenn der Transistor T3 eingeschaltet und der Transistor T4 ausgeschaltet ist. Dann wäre es nicht mehr möglich, den Transistor T4 wieder einzuschalten. Hierzu ist erfindungsgemäß ein Überbrückungselement 9 vorgesehen, dessen Funktion anhand der FIG 4 erläutert wird.

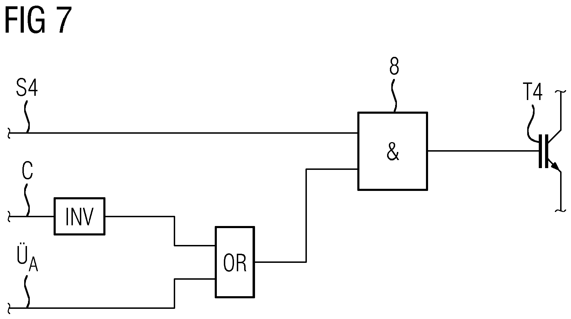

Das Überbrückungselement 9 ist im vorliegenden Fall ein Überbrückungsschalter 9. Allerdings können auch in der Funktion vergleichbare Bauelemente, z.B. ein MOSFET oder ein Bipolartransistor, oder eine entsprechende Logikschaltung, wie sie in FIG 7 dargestellt ist, als Überbrückungselement 9 verwendet werden. Die logische UND-Verknüpfung 8 wird bei einer positiven Schaltflanke eines Steuersignals der Ansteuerschaltung S4 durch Schlie-ßen des Überbrückungsschalters 9 überbrückt.

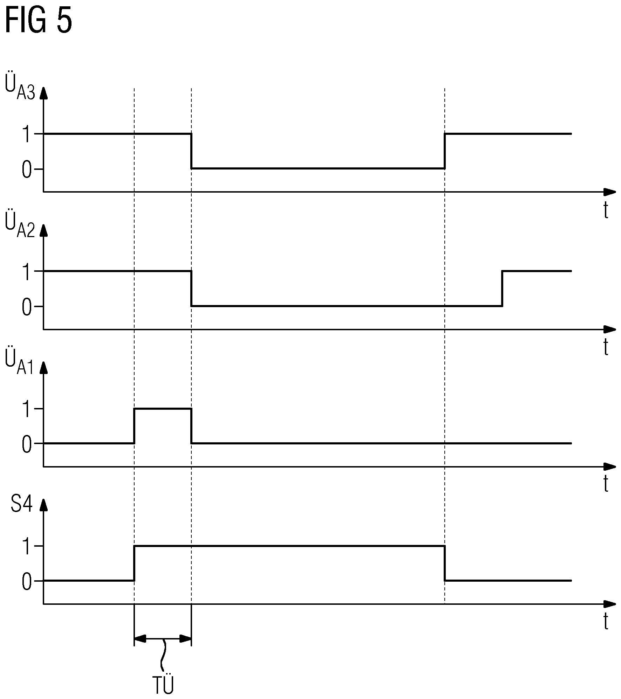

Ein dazugehöriger Signalverlauf U_{A} für den Überbrückungsschalter 9 ist in FIG 5 dargestellt. Dabei zeigt FIG 5 einen normierten Verlauf eines ersten, zweiten und dritten Signalverlaufs U_{A1} für den Überbrückungsschalter 9 sowie einen normierten Signalverlauf S4 des Ansteuersignals für den äußeren Transistor T4 über der Zeit t. Der für die Ausgestaltungsform der Erfindung gemäß FIG 4 relevante Signalverlauf ist erste Signalverlauf U_{A1}.

Nach einer ersten (zeitlich von links gesehen) positiven Schaltflanke des Ansteuersignals S4 muss der Überbrückungsschalter 9 für eine Zeitdauer T_{Ü} eingeschaltet werden. Damit wird erreicht, dass der Schaltbefehl des Ansteuersignals S4 für den äußeren Transistor T4 unabhängig von dem an dem Punkt C anliegenden Potential den Transistor T4 einschaltet. Die Zeitdauer T_{Ü} ist dabei derart lang zu wählen, dass der Transistor T4 seine Sperrspannung innerhalb der Zeitdauer T_{Ü} sicher abbauen kann, so dass die über dem Transistor T4 anliegende Spannung U_{T4} unter einen gewissen Wert fallen kann, beispielsweise unter 5V.

Während der Zeitdauer T_{Ü} ist der Transistor T3 nicht vor einer Überspannung geschützt. Schaltet der Transistor T3 unmittelbar nach der ersten positiven Schaltflanke des Ansteuersignals S4 ab, so wird der Transistor T3 mit einer unzulässig hohen Spannung belastet. Deshalb ist die Zeitdauer T_{Ü} darüber hinaus derart kurz zu wählen, dass der Transistor T3 während der Zeitdauer T_{Ü} nicht durch die Überspannung zerstört werden kann. Ein typischer Wert für die Zeitdauer _{TÜ} liegt in einem Bereich von einer Mikrosekunde.

Nach Ablauf der Zeitdauer T_{Ü} hat der Transistor T4 eingeschaltet und das Potenzial C ist unter eine bestimmte Schwelle gesunken, beispielsweise unter 5V. Damit wird der Schaltbefehl der Ansteuerschaltung S4 durch die logische UND-Verknüpfung 8 an den Transistor T4 weitergeleitet. Zudem wird nach Ablauf der Zeit T_{Ü} der Überbrückungsschalter 9 für die verbleibende Einschaltdauer des Transistors T4 geöffnet. Damit ist die erfindungsgemäße Überwachungsschaltung aktiv und der Transistor T3 wird bei fehlerhaftem Abschalten effektiv vor einer schädigenden Überspannung geschützt.

Die Signale Ü_{A2} und Ü_{A3} in FIG 5 stellen Beispiele dar, wie der Signalverlauf für den Überbrückungsschalter 9 besonders einfach aus dem Schaltbefehlsignal der Ansteuerschaltung S4 erzeugt werden kann. Das Signal Ü_{A2} stellt dabei einen invertierten und um die Zeitdauer T_{Ü} verschobenen Verlauf des Signals der Ansteuerschaltung S4 dar. Das Signal Ü_{A3} ist ein invertierter Verlauf des Signals der Ansteuerschaltung S4, wobei lediglich eine negative Flanke des Signals Ü_{A3} um die Zeitdauer T_{Ü} zeitlich verschoben ist.

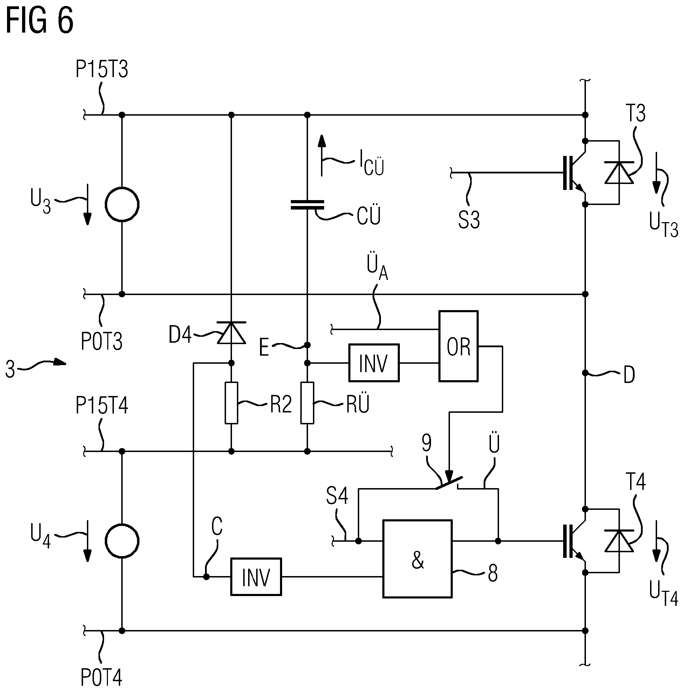

In FIG 6 ist eine zweite Ausführungsform einer unteren Halbbrücke 3 eines erfindungsgemäßen Dreipunkt-NPC-Umrichters 1 dargestellt. Alle in FIG 6 verwendeten Potentiale beziehen sich auf das in der Zeichnung unten befindliche Potential POT4. Bei einer Differenz des Potentials P15T4 und des Potentials P0T4, handelt es sich beispielhaft um eine Spannung U₃ in Höhe von 15 V. Bei einer Differenz des Potentials P15T3 und des Potentials P0T3, welches an dem Punkt D anliegt, handelt es sich beispielhaft um eine Spannung U₂ in Höhe von 15 V.

Vergleichbar mit der ersten Ausführungsform der unteren Halbbrücke 3, die anhand der Figuren 3 und 4 beschrieben ist, umfasst die in FIG 6 dargestellte untere Halbbrücke 3 eine Diode D4, zwei Transistoren T3, T4 sowie zwei Ansteuerschaltungen S3, S4 für die Transistoren T3, T4.

Der in FIG 6 in der Zeichenebene weiter unten angeordnete Transistor T4 ist ein äußerer Transistor T4 der unteren Halbbrücke 3. Der in FIG 6 in der Zeichenebene weiter oben angeordnete Transistor T3 ist ein innerer Transistor T3 der unteren Halbbrücke 3. Mittels der Ansteuerschaltungen S3, S4 kann ein jeweiliger Schaltzustand der Transistoren T3, T4 (durchlassend/sperrend) gesteuert werden.

Im Unterschied zu der ersten Ausführungsform umfasst die untere Halbbrücke 3 einen Kondensator CÜ und einen Widerstand RÜ, die für eine Einwirkung auf den Überbrückungsschalter 9 vorgesehen sind. Die beiden Bauelemente CÜ und RÜ in der in FIG 6 dargestellten Anordnung innerhalb der unteren Halbbrücke 3 werden vorliegend auch als Differenzierer bezeichnet.

Die Zeitdauer T_{Ü}, in der die logische UND-Verknüpfung 8 überbrückt wird, kann durch das Vorsehen des Kondensators CÜ und des Widerstands RÜ soweit verkürzt werden, dass sie nur noch eine Laufzeit einer Ansteuerung des Transistors T4 abdeckt und nicht eine komplette Dauer der Schaltflanke des Transistors T4. Ein typischer Wert für die Zeitdauer T_{Ü} beträgt in diesem Fall 100ns.

Im Gegensatz zur Schaltung gemäß FIG 4 wird der Überbrückungsschalter 9 auch dann geschlossen, wenn ein Potenzial an dem Punkt E unter einen Wert von beispielsweise 15V absinkt, z.B. auf einen Wert unter 10V. Das Potenzial an dem Punkt E sinkt immer dann ab, wenn ein positiver Strom ICÜ fließt. Dies ist dann der Fall, wenn eine Summe einer Spannung U_{T3} über dem inneren Transistor T3 und einer Spannung U_{T4} über dem äußeren Transistor T4 abnimmt. Dies ist in folgenden zulässigen Betriebsfällen der Fall:
- Der innere Transistor T3 ist bereits eingeschaltet, d.h. er befindet sich im Schaltzustand "durchlassend", und der Transistor T4 schaltet ein, d.h. er "sperrt": Dies ist ein ordnungsgemäßer Betriebsfall, in dem der Transistor T4 einschalten darf.
- Die Transistoren T3 und T4 schalten beide gleichzeitig ein, wobei der Transistor T3 etwas früher als der Transistor T4 einschaltet. Dieser Fall ist ebenfalls zulässig und der Transistor T4 darf daher einschalten.

Fließt hingegen kein Strom ICÜ nach der positiven Schaltflanke des Signals der Ansteuerschaltung S4 und dem Ablauf der Zeitdauer T_{Ü}, so schaltet lediglich der Transistor T4 ein und der Transistor T3 bleibt gesperrt. Dies ist ein kritischer Betriebsfall. In diesem Fall wird der Überbrückungsschalter 9 nach Ablauf der Zeitdauer T_{Ü} geöffnet. Da ein Potenzial an dem Punkt C aufgrund des fehlenden Einschaltens des Transistors T3 nicht unter die erforderliche Schwelle von beispielsweise 5V abgesunken ist, wird der Einschaltvorgang des Transistors T4 abgebrochen. Der Transistor T3 wird während der Zeitdauer T_{Ü} mit einer erhöhten Spannung belastet, und zwar zusätzlich zu seiner statische Sperrspannung mit genau der Spannung, die der Transistor T4 während der Zeitdauer T_{Ü} abgebaut hat. Diese Überspannung ist jedoch nur gering und kann den Transistor T3 nicht beschädigen.

Schaltet der Transistor T3 ein, z.B. weil das Ansteuersignal der Ansteuerschaltung S3 aufgrund von Laufzeittoleranzen nur leicht gegenüber dem Ansteuersignal der Ansteuerschaltung S4 verzögert wird, so sinkt das Potenzial an dem Punkt E mit dem Einschalten des Transistors T3 ab und der Überbrückungsschalter 9 wird wieder geschlossen, so dass auch der Transistor T4 gemäß dem Signal der Ansteuerschaltung S4 einschaltet. Bleibt der Transistor T3 hingegen abgeschaltet, so schaltet auch der Transistor T4 unabhängig von Signal der Ansteuerschaltung S4 nicht ein.

Der in FIG 6 untere Anschluss des Widerstands RÜ kann statt mit dem Potenzial P15T4 auch mit anderen für eine Ansteuerung des Transistors T4 relevanten Potenzialen verbunden werden. Dies bewirkt lediglich einen Offset.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Anprüche zu verlassen.

## Patentansprüche

1. Dreipunkt-NPC-Stromrichter (1) mit einer oberen
Halbbrücke (2) und einer unteren Halbbrücke (3), wobei jede Halbbrücke (2, 3) jeweils einen inneren Transistor (T2, T3) und einen äußeren Transistor (T1, T4) aufweist, **dadurch gekennzeichnet, dass**
der innere Transistor (T2) der oberen Halbbrücke (2) mit dem äußeren Transistor (T1) der oberen Halbbrücke (2) derart zusammenwirkend ausgebildet ist, dass ein Signal, das einen Schaltzustand des inneren Transistors (T2) wiedergibt, über eine logische UND-Verknüpfung (6) unmittelbar zur Schaltung des äußeren Transistors (T1) eingekoppelt wird und einen Schaltzustand des äußeren Transistors (T1) unmittelbar beeinflusst,
wobei der Schaltzustand des inneren Transistors (T2) aus einem Potential an dem Punkt B zwischen dem inneren Transistor (T2) und dem äußeren Transistor (T1) ermittelt wird,
wobei der oberen Halbbrücke eine Schaltungsanordnung zugeordnet ist, umfassend:
eine erste Ansteuerschaltung (S1), womit der Schaltzustand des äußeren Transistors (T1) gesteuert werden kann;
eine zweite Ansteuerschaltung (S2), die ausgangsseitig mit dem inneren Transistor (T2) verbunden ist, und womit der Schaltzustand des inneren Transistors (T2) gesteuert werden kann;
die obengenannte logische UND-Verknüpfung (6), die ausgangsseitig mit dem äußeren Transistor (T1) verbunden ist;
eine Diode (D3);
einen Widerstand (R1);
wobei an der Anode der Diode (D3) ein Potential (P15T2), das eine Potentialdifferenz (U2) gegenüber einem dem Punkt B abgewandten Leistungsanschluss (5) des inneren Transistors (T2) aufweist, angelegt werden kann;
wobei die erste Ansteuerschaltung (S1) ausgangsseitig mit einem ersten Eingang der logischen UND-Verknüpfung (6) verbunden ist;
wobei die Kathode der Diode (D3) über einen Punkt A mit einem zweiten Eingang der logischen UND-Verknüpfung (6) verbunden ist;
wobei der Widerstand (R1) die Punkten A und B miteinander verbindet; womit die Schaltungsanordnung dazu ausgelegt ist, dass
eine Einwirkung des Signals, das den Schaltzustand des inneren Transistors (T2) wiedergibt, auf den Schaltzustand des äußeren Transistors (T1) ohne jegliche Potentialtrennung erfolgt, derart, dass, wenn die beiden Transistoren (T1, T2) der oberen Halbbrücke (2) eingeschaltet sind, und der innere Transistor (T2) in einen Schaltzustand "sperrend" versetzt wird, der äußere Transistor (T1) demzufolge auch sofort in einen Schaltzustand "sperrend" versetzt wird, und dass, wenn die beiden Transistoren (T1, T2) der oberen Halbbrücke (2) abgeschaltet sind, der äußere Transistor (T1) nicht in einen Schaltzustand "durchlassend" versetzt werden kann, bevor der innere Transistor (T2) in einen Schaltzustand "durchlassend" versetzt worden ist.

2. Dreipunkt-NPC-Stromrichter (1) mit einer oberen Halbbrücke (2) und einer unteren Halbbrücke (3), wobei jede Halbbrücke (2, 3) jeweils einen inneren Transistor (T2, T3) und einen äußeren Transistor (T1, T4) aufweist, wobei der innere Transistor (T3) der unteren Halbbrücke (3) über einen Punkt D mit dem äußeren Transistor (T4) verbunden ist,
**dadurch gekennzeichnet, dass** der innere Transistor (T2, T3) der unteren Halbbrücke (3) mit dem äußeren Transistor (T4) der unteren Halbbrücke (3) derart zusammenwirkend ausgebildet ist, dass ein Signal, das einen Schaltzustand des inneren Transistors (T3) wiedergibt, über eine logische UND-Verknüpfung (8) unmittelbar zur Schaltung des äußeren Transistors (T4) eingekoppelt wird und einen Schaltzustand des äußeren Transistors (T4) unmittelbar beeinflusst,
wobei der unteren Halbbrücke eine Schaltungsanordnung zugeordnet ist, umfassend:
eine erste Ansteuerschaltung (S4), womit der Schaltzustand des äußeren Transistors (T4) gesteuert werden kann;
eine zweite Ansteuerschaltung (S3), die ausgangsseitig mit dem inneren Transistor (T3) verbunden ist, und womit der Schaltzustand des inneren Transistors (T3) gesteuert werden kann;
die obengenannte logische UND-Verknüpfung (8), die ausgangsseitig mit dem äußeren Transistor (T4) verbunden ist;
eine Diode (D4);
einen Widerstand (R2);
einen Inverter (INV);
wobei an einem ersten Ende des Widerstands (R2) ein Potential (P15T4), das eine Potentialdifferenz (U4) gegenüber einem dem Punkt D abgewandten Leistungsanschluss des äußeren Transistors (T4) aufweist, angelegt werden kann;
wobei die erste Ansteuerschaltung (S4) ausgangsseitig mit einem ersten Eingang der logischen UND-Verknüpfung (8) verbunden ist, wobei die Anode der Diode (D4) über den Inverter (INV) mit einem zweiten Eingang der logischen UND-Verknüpfung (8) verbunden ist, wobei die Kathode der Diode (D4) mit einem dem Punkt D abgewandten Leistungsanschluss des inneren Transistors (T3) verbunden ist;
wobei das zweite Ende des Widerstands (R2) mit der Anode der Diode (D4) verbunden ist; und
ein Überbrückungselement (9), das dazu ausgebildet ist, eine unmittelbare Beeinflussung des Schaltzustands des äußeren Transistors (T4) durch das Signal, das den Schaltzustand des inneren Transistors (T3) wiedergibt, für eine bestimmte Zeitdauer (T_{Ü}) zu unterbrechen;
womit die Schaltungsanordnung dazu ausgelegt ist, dass
eine Einwirkung des Signals, das den Schaltzustand des inneren Transistors (T3) wiedergibt, auf den Schaltzustand des äußeren Transistors (T4) ohne jegliche Potentialtrennung erfolgt, und
dass, wenn die beiden Transistoren (T3, T4) der unteren Halbbrücke (3) eingeschaltet sind, und der innere Transistor (T3) in einen Schaltzustand "sperrend" versetzt wird, der äußere Transistor (T4) demzufolge auch sofort in einen Schaltzustand "sperrend" versetzt wird, und dass wenn die beiden Transistoren (T3, T4) der unteren Halbbrücke (3) abgeschaltet sind, der äußere Transistor (T4) nicht in einen Schaltzustand "durchlassend" versetzt werden kann, bevor der innere Transistor (T3) in einen Schaltzustand "durchlassend" versetzt worden ist.

3. Dreipunkt-NPC-Stromrichter (1) mit einer oberen Halbbrücke (2) und einer unteren Halbbrücke (3), wobei jede Halbbrücke (2, 3) jeweils einen inneren Transistor (T2, T3) und einen äußeren Transistor (T1, T4) aufweist, **dadurch gekennzeichnet, dass**
die obere Halbbrücke (2) gemäß Anspruch 1 und die untere Halbbrücke (3) gemäß Anspruch 2 ausgebildet sind.

## Claims

1. Neutral point clamped inverter (1) with an upper half bridge (2) and a lower half bridge (3), wherein each half bridge (2, 3) has an inner transistor (T2, T3) and an outer transistor (T1, T4) in each case,
**characterised in that**
the inner transistor (T2) of the upper half bridge (2) is embodied to interact with the outer transistor (T1) of the upper half bridge (2) in such a way that a signal that reproduces a switch state of the inner transistor (T2) is coupled directly to the circuit of the outer transistor (T1) by way of a logical AND link (6) and directly influences a switch state of the outer transistor (T1),
wherein the switch state of the inner transistor (T2) is determined from a potential at point B between the inner transistor (T2) and the outer transistor (T1),
wherein the upper half bridge is assigned a circuit arrangement comprising:
a first activation circuit (S1), whereby the switch state of the outer transistor (T1) can be controlled;
a second activation circuit (S2), which is connected on the output side to the inner transistor (T2) and whereby the switch state of the inner transistor (T2) can be controlled;
the afore-cited logical AND link (6), which is connected on the output side to the outer transistor (T1);
a diode (D3);
a resistor (R1);
wherein a potential (P15T2) which has a potential difference (U2) with respect to a power connection (5), facing away from the point B, of the inner transistor (T2), can be applied to the anode of the diode (D3);
wherein the first activation circuit (S1) is connected on the output side to a first input of the logical AND link (6);
wherein the cathode of the diode (D3) is connected to a second input of the logical AND link (6) by way of a point A;
wherein the resistor (R1) connects the points A and B to one another; whereby the circuit arrangement is designed so that an effect of the signal that reproduces the switch state of the inner transistor (T2) acts on the switch state of the outer transistor (T1) without any potential disconnection such that when the two transistors (T1, T2) of the upper half bridge (2) are switched on, and the inner transistor (T2) is put into an "off" switch state, the outer transistor (T1) is accordingly immediately also put into an "off" switch state and that when the two transistors (T1, T2) of the upper half bridge (2) are switched off, the outer transistor (T1) cannot be put into an "on" switch state before the inner transistor (T2) has been put into an "on" switch state.

2. Neutral point clamped inverter (1) with an upper half bridge (2) and a lower half bridge (3), wherein each half bridge (2, 3) has an inner transistor (T2, T3) and an outer transistor (T1, T4) in each case, wherein the inner transistor (T3) of the lower half bridge (3) is connected to the outer transistor (T4) by way of a point D,
**characterised in that**
the inner transistor (T2, T3) of the lower half bridge (3) is embodied to interact with the outer transistor (T4) of the lower half bridge (3) in such a way that a signal that reproduces a switch state of the inner transistor (T3) is coupled directly to the circuit of the outer transistor (T4) and directly influences a switch state of the outer transistor (T4) by way of a logical AND link (8),
wherein the lower half bridge is assigned a circuit arrangement comprising:
a first activation circuit (S4), whereby the switch state of the outer transistor (T4) can be controlled;
a second activation circuit (S3), which is connected on the output side to the inner transistor (T2) and whereby the switch state of the inner transistor (T2) can be controlled;
the afore-cited logical AND link (6), which is connected on the output side to the outer transistor (T4);
a diode (D4);
a resistor (R2);
an inverter (INV);
wherein a potential (P15T4) which has a potential difference (U4) with respect to a power connection (5), facing away from the point D, of the outer transistor (T2), can be applied to a first end of the resistor (R2);
wherein the first activation circuit (S4) is connected on the output side to a first input of the logical AND link (8),
wherein the anode of the diode (D4) is connected to a second input of the logical AND link (8) by way of the inverter (INV), wherein the cathode of the diode (D4) is connected to a power connection, facing away from the point D, of the inner transistor (T3);
wherein the second end of the resistor (R2) is connected to the anode of the diode (D4); and
a bridging element (9) which is embodied to interrupt a direct influence of the switch state of the outer transistor (T4) by means of the signal, which reproduces the switch state of the inner transistor (T3), for a specific period of time (T_{Ü});
whereby the circuit arrangement is designed such that an effect of the signal that reproduces the switch state of the inner transistor (T3) acts on the switch state of the outer transistor (T4) without any potential disconnection, and that when the two transistors (T3, T4) of the lower half bridge (3) are switched on and the inner transistor (T3) is put into an "off" switch state, the outer transistor (T4) is accordingly also put immediately into an "off" switch state and that when the two transistors (T3, T4) of the lower half bridge (3) are switched off, the outer transistor (T4) cannot be put into an "on" switch state before the inner transistor (T3) has been put into an "on" switch state.

3. Neutral point clamped inverter (1) with an upper half bridge (2) and a lower half bridge (3), wherein each half bridge (2, 3) has an inner transistor (T2, T3) and an outer transistor (T1, T4) in each case,
**characterised in that**
the upper half bridge (2) is embodied according to claim 1 and the lower half bridge (3) is embodied according to claim 2.

## Revendications

1. Convertisseur (1) NPC à trois points, comprenant un demi-pont (2) supérieur et un demi-pont (3) inférieur, dans lequel chaque demi-pont (2, 3) a respectivement un transistor (T2, T3) et un transistor (T1, T4) extérieur,
**caractérisé en ce que**
le transistor (T2) intérieur du demi-pont (2) supérieur est constitué à coopération avec le transistor (T1) extérieur du demi-pont (2) supérieur, de manière à ce qu'un signal, qui représente un état de commutation du transistor (T2) intérieur, soit, par un élément (6) logique ET, modulé directement pour la commutation du transistor (T1) extérieur et influence directement un état de commutation du transistor (T1) extérieur,
dans lequel l'état de commutation du transistor (T2) intérieur est déterminé à partir d'un potentiel au point B entre le transistor (T2) intérieur et le transistor (T1) extérieur,
dans lequel au demi-pont supérieur est associé un montage comprenant :
un premier circuit (S1) de commande, par lequel l'état de commutation du transistor (T1) extérieur peut être commandé ;
un deuxième circuit (S2) de commande, qui est relié du côté de la sortie au transistor (T2) intérieur, et par lequel l'état de commutation du transistor (T2) intérieur peut être commandé ;
l'élément (6) logique ET mentionné ci-dessus, qui est relié du côté de la sortie au transistor (T1) extérieur ;
une diode (D3) ;
une résistance (R1) ;
dans lequel il peut être appliqué, à l'anode de la diode (D3), un potentiel (P15T2), qui a une différence (U2) de potentiel par rapport à une borne (5) de puissance, non tournée vers le point B du transistor (T2) intérieur ;
dans lequel le premier circuit (S1) de commande est relié du côté de la sortie à une première entrée de l'élément (6) logique ET ;
dans lequel la cathode de la diode (D3) est reliée par un point A à une deuxième entrée de l'élément (6) logique ET ;
dans lequel la résistance (R1) relie entre eux les points A et B, grâce à quoi le montage est conçu pour qu'un effet du signal, qui représente l'état de commutation du transistor (T2) intérieur, se produise sur l'état de commutation du transistor (T1) extérieur sans quelle que séparation de potentiel que ce soit, de manière à ce que, lorsque les deux transistors (T1, T2) du demi-pont (2) supérieur sont à l'état de conduction et lorsque le transistor (T2) intérieur est mis dans un état de commutation « bloquant », le transistor (T1) extérieur soit mis en conséquence également immédiatement dans un état de commutation « bloquant », et **en ce que**, lorsque les deux transistors (T1, T2) du demi-pont (2) supérieur sont mis à l'état de non conduction, le transistor (T1) extérieur ne peut pas être mis dans un état de commutation « passant », avant que le transistor (T2) intérieur ait été mis dans un état de commutation « passant ».

2. Convertisseur (1) NPC à trois points comprenant un demi-pont (2) supérieur et un demi-pont (3) inférieur, dans lequel chaque demi-pont (2, 3) a respectivement un transistor (T2, T3) intérieur et un transistor (T1, T4) extérieur, dans lequel le transistor (T3) intérieur du demi-pont (3) inférieur est relié au transistor (T4) extérieur par un point D,
**caractérisé en ce que** le transistor (T2, T3) intérieur du demi-pont (3) inférieur est constitué à coopération avec le transistor (T4) extérieur du demi-pont (3) inférieur, de manière à ce qu'un signal, qui représente un état de commutation du transistor (T3) intérieur, soit, par un élément (8) logique ET, modulé directement pour la commutation du transistor (T4) extérieur et influence directement un état de commutation du transistor (T4) extérieur, dans lequel au demi-pont inférieur est associé un montage comprenant :
un premier circuit (S4) de commande, par lequel l'état de commutation du transistor (T4) extérieur peut être commandé ;
un deuxième circuit (S3) de commande, qui est relié du côté de la sortie au transistor (T3) intérieur et par lequel l'état de commutation du transistor (T3) intérieur peut être commandé ;
l'élément (8) logique ET mentionné ci-dessus, qui est relié du côté de la sortie au transistor (T4) extérieur ;
une diode (D4) ;
une résistance (R2) :
un inverseur (INV) ;
dans lequel il peut être appliqué, à une première extrémité de la résistance (R2), un potentiel (P15T4), qui a une différence (U4) de potentiel par rapport à une borne de puissance, non tournée vers le point D, du transistor (T4) extérieur,
dans lequel le premier circuit (S4) de commande est relié du côté de la sortie à une première entrée de l'élément (8) logique ET, dans lequel l'anode de la diode (D4) est, par l'inverseur (INV), relié à une deuxième entrée de l'élément (8) logique ET, dans lequel la cathode de la diode (D4) est reliée à une borne de puissance, non tournée vers le point D, du transistor (T3) intérieur ;
dans lequel la deuxième extrémité de la résistance (R2) est reliée à l'anode de la diode (D4) ; et
un élément (9) de dérivation, qui est constitué pour interrompre, pendant une durée (T_{Ü}) déterminée, une influence directe de l'état de commutation du transistor (T4) extérieur par le signal, qui représente l'état de commutation du transistor (T3) intérieur ;
le montage étant ainsi conçu, de manière à ce qu'un signal, qui représente l'état de commutation du transistor (T3) intérieur, produise l'état de commutation du transistor (T4) extérieur sans quelle que séparation que ce soit, et
**en ce que**, lorsque les deux transistors (T3, T4) du demi-pont (3) inférieur sont à l'état de conduction et lorsque le transistor (T3) intérieur est mis dans un état de commutation « bloquant », le transistor (T4) extérieur est mis en conséquence également immédiatement dans un état de commutation « bloquant », et **en ce que**, lorsque les deux transistors (T3, T4) du demi-pont (3) inférieur sont mis à l'état de non conduction, le transistor (T4) extérieur ne peut pas être mis dans un état de commutation « passant », avant que le transistor (T3) intérieur ait été mis dans un état de commutation « passant ».

3. Convertisseur (1) NPC à trois points comprenant un demi-pont (2) supérieur et un demi-pont (3) inférieur, dans lequel chaque demi-pont (2, 3) a respectivement un transistor (T2, T3) intérieur et un transistor (T1, T4) extérieur,
**caractérisé en ce que**
le demi-pont (2) supérieur est constitué suivant la revendication 1, et le demi-pont (3) inférieur est constitué suivant la revendication 2.
